# FASCICULE DE BREVET EUROPEEN

(11) **EP 2 937 609 B1**
(45) Date de publication et mention de la délivrance du brevet: **28.02.2018**
(21) Numéro de dépôt: 15158938.9
(22) Date de dépôt: 13.03.2015
(51) Int. Cl.: F16K 51/00, F16K 27/02, F16K 27/04

(54) **ELECTROVANNE À MOYEN DE MONTAGE AMÉLIORÉ DE TUBULURES SUR CELLE-CI**
MAGNETVENTIL MIT VERBESSERTER MONTAGEMÖGLICHKEIT VON ROHRLEITUNGEN
SOLENOID VALVE WITH IMPROVED MEANS FOR MOUNTING TUBES THEREON

(30) Priorité: 23.04.2014 FR 1453634
(43) Date de publication de la demande: 28.10.2015
(73) Titulaire: ASCO SAS, 28110 Lucé (FR)
(72) Inventeur: Longpre, Gonzague, 28110 LUCE (FR); Douël, Luc, 28630 LE COUDRAY (FR); Mellier, Pierrick, 28190 SAINT LUPERCE (FR)
(74) Mandataire: Nony

(56) Documents cités:
- EP-A2- 2 241 685
- DE-B3-102004 044 497
- US-A1- 2004 036 290

## Description

La présente invention concerne les électrovannes et plus particulièrement le montage sur celles-ci de tubulures destinées à acheminer vers l'électrovanne et hors de celle-ci un fluide, gaz ou liquide, circulant au sein d'un circuit pneumatique ou hydraulique comportant cette électrovanne.

L'invention concerne plus particulièrement mais non exclusivement les électrovannes utilisées au sein de dispositifs d'analyse, notamment médicaux.

Il est connu de prévoir sur une électrovanne des canules en forme de « sapin », servant au montage de tubulures, qui comportent une série de stries annulaires. Ces canules présentent l'inconvénient de nécessiter l'application d'une force relativement élevée pour assembler la tubulure sur la canule correspondante ou procéder à son enlèvement, ce qui peut à la longue induire des troubles musculo-squelettiques aux opérateurs confrontés au montage ou démontage des électrovannes.

Il est également connu des demandes de brevet DE 10 2004 044497 B3 et US 2004/036290 A1 de fixer des tubulures sur des canules de l'électrovanne grâce à une bague de serrage qui agit en compriment un joint interposé entre la bague et la tubulure.

Il existe par conséquent un besoin pour faciliter la fixation des tubulures sur les électrovannes, tout en maintenant une fixation fiable, garante de l'absence de fuites ou autres dysfonctionnements.

L'invention vise à répondre à ce besoin, et elle y parvient grâce à une électrovanne, comportant :
- une base comportant une platine,
- au moins une canule de réception d'une tubulure en matière plastique, s'étendant en avant de la platine, sur laquelle la tubulure est destinée à être emmanchée,
- un système de retenue de la tubulure sur la canule, comportant deux parties mobiles l'une par rapport à l'autre selon un mouvement qui les rapproche selon une direction d'assemblage sensiblement perpendiculaire à l'axe de la canule, pouvant prendre au moins une position assemblée où les deux parties exercent une force sur la tubulure pour la maintenir serrée contre la canule, tout en étant retenues par la base.

Grâce à l'invention, il est possible de monter ou démonter facilement une tubulure sur sa canule correspondante. En particulier, la canule peut être dépourvue de stries ou autres reliefs d'accrochage, de sorte que la tubulure peut être facilement emmanchée sur ou séparée de la canule. La ou les canules peuvent ainsi présenter une surface extérieure lisse, ce qui peut de surcroît faciliter leur démoulage lors de la fabrication de la base par moulage de matière plastique.

Le maintien de la tubulure sur la canule est assuré par le système de retenue, lequel peut être facilement mis en place ou enlevé par l'opérateur.

De préférence, les deux parties mobiles du système sont rigides, notamment sensiblement indéformables et sensiblement incompressibles.

L'électrovanne comporte de préférence au moins deux canules, voire au moins trois canules, et le même système de retenue peut être utilisé pour maintenir toutes les tubulures disposées sur ces canules.

De préférence encore, toutes les canules sont d'axes longitudinaux parallèles.

De préférence, le système de retenue ne comporte pas de partie déformable qui se déforme pour assurer le serrage de la tubulure sur la canule, notamment est dépourvu de joint compressible.

De préférence, les deux parties du système de retenue coopèrent par encliquetage dans la position assemblée. Cela rend l'assemblage des deux parties aisé et rapide.

Il est tout particulièrement avantageux que les deux parties du système de retenue soient configurées pour prendre une position pré-assemblée, où elles sont retenues sur la base tout en permettant la mise en place de la ou des tubulures sur la ou les canules. Cela permet de proposer électrovanne avec les parties de retenue déjà présentes sur celle-ci, ce qui simplifie encore l'opération de montage.

Le pré-assemblage des parties de retenue peut s'effectuer par encliquetage des parties de retenue l'une sur l'autre avec une possibilité de rapprochement, notamment selon un axe perpendiculaire à la direction d'emmanchement de la tubulure sur la canule, des parties de retenue pour passer dans la position assemblée finale où elles assurent le maintien des tubulures sur les canules.

Les deux parties du système de retenue peuvent être totalement séparées avant leur montage sur la base de l'électrovanne. En variante, elles sont déjà reliées entre elles, par exemple par un lien flexible venu de moulage, avant de s'assembler sur la base de l'électrovanne.

De préférence, les deux parties ne sont pas assemblées par un mouvement rotatif ou linéaire selon un axe parallèle à la direction d'emmanchement de la tubulure sur la canule. Notamment, aucune des deux parties ne vient entourer l'autre et/ou la serrer contre la tubulure. Aucune des deux parties ne constitue une bague ou un joint entourant totalement la tubulure.

L'une des parties du système de retenue peut comporter au moins une patte de fixation élastiquement déformable, adaptée à s'encliqueter sur un relief de l'autre partie lorsque les deux parties sont en position assemblée. Dans ce cas, les deux parties sont avantageusement configurées de telle façon à permettre à l'opérateur de pouvoir déformer manuellement la ou les pattes de fixation en cas de besoin, afin de les séparer.

La ou chaque patte de fixation peut être adaptée à s'encliqueter sur un premier relief de maintien des parties de retenue en position pré-assemblée, puis à s'encliqueter sur un deuxième relief de maintien des parties de retenue en position assemblée.

Le passage du premier au deuxième relief peut se faire en exerçant manuellement une poussée pour rapprocher l'une de l'autre les deux parties de retenue, notamment selon un axe perpendiculaire à la direction d'emmanchement de la tubulure sur la canule.

Les deux parties du système de retenue présentent de préférence chacune au moins un bourrelet agencé pour pincer la tubulure contre la canule. Ce bourrelet peut présenter une section transversale demi-circulaire, ce qui réduit le risque d'endommager la matière plastique de la tubulure.

De préférence, chacune des deux parties vient en contact avec une portion de la surface externe de la tubulure pour serrer cette dernière directement sur la canule. Notamment, en coupe perpendiculaire à la direction d'emmanchement de la tubulure sur la canule, l'une des deux parties peut venir en contact d'une partie seulement de la circonférence de la tubulure et l'autre partie venir en contact du reste de la circonférence de la tubulure.

L'une au moins, ou chaque partie du système de retenue, peut présenter une ouverture sensiblement demi-circulaire, destinée à se placer autour d'une tubulure correspondante.

Lorsque l'électrovanne présente trois canules, l'une des parties du système de retenue peut comporter trois logements, dont deux logements latéraux de section chacun sensiblement en quart de cercle, et un logement central de section sensiblement en U, lorsque les parties sont observées de dessus, dans l'axe des canules. L'autre partie peut présenter une avancée centrale, destinée à s'engager entre deux des canules, et deux logements chacun de section sensiblement en J, disposés dos à dos et de part et d'autre de ladite avancée.

L'accrochage du système de retenue sur la base est de préférence obtenu par une coopération de formes entre l'une au moins des parties du système de retenue et au moins un relief de la base, et mieux par une coopération de formes de chaque partie du système de retenue avec au moins un relief de la base.

La base peut présenter des logements dans lesquels s'engagent les parties du système de retenue au moins en position assemblée, et de préférence à la fois en position de pré-assemblage et en position assemblée, pour retenir celles-ci sur la base. En particulier, chaque partie peut comporter deux pattes latérales qui viennent s'engager chacune dans un logement défini par un relief en forme de T de la base, lorsque les deux parties sont assemblées l'une sur l'autre, et de préférence aussi lorsque les deux parties sont en position pré-assemblée.

L'électrovanne peut être pneumatique, à pression ou à vide, ou hydraulique

Les tubulures sont de préférence en un matériau élastiquement déformable, notamment en silicone.

L'invention pourra être mieux comprise à la lecture de la description détaillée qui va suivre, d'exemples non limitatifs de mise en oeuvre de celle-ci, et à l'examen du dessin annexé, sur lequel :
- la figure 1 représente, de façon schématique et en perspective, un exemple d'électrovanne réalisé conformément à l'invention,
- la figure 2 est une vue éclatée du système de retenue de l' électrovanne de la figure 1,
- la figure 3 représente isolément les deux parties du système de retenue, avant pré-assemblage sur la base,
- la figure 4 représente le système de retenue de la figure 1, avant pré-assemblage des deux parties de retenue correspondantes,
- la figure 5 représente le système de retenue de la figure 4, après pré-assemblage des deux parties de retenue correspondantes,
- la figure 6 représente un détail de la figure 5,
- la figure 7 est une vue analogue à la figure 1 après passage en position assemblée des parties de retenue,
- les figures 8 et 9 illustrent le passage de la position de pré-assemblage à la position assemblée finale,
- la figure 10 est une autre vue du système de retenue en position pré-assemblée, après assemblage des tubulures sur canules,
- la figure 11 est une coupe dans l'axe d'une canule, lorsque les parties de retenue sont en position assemblée,
- les figures 12 et 13 sont des vues analogues à la figure 1, d'une variante de mise en oeuvre de l'invention, respectivement avec les parties de retenue en position pré-assemblée et en position assemblée,
- les figures 14 et 15 illustrent le passage du système de retenue de la figure 12 de la position de pré-assemblage à la position assemblée,
- la figure 16 représente isolément les deux parties de retenue avant pré-assemblage,
- les figures 17 et 18 illustrent le passage des parties de retenue en position pré-assemblée, et
- la figure 19 représente un détail de la figure 18.

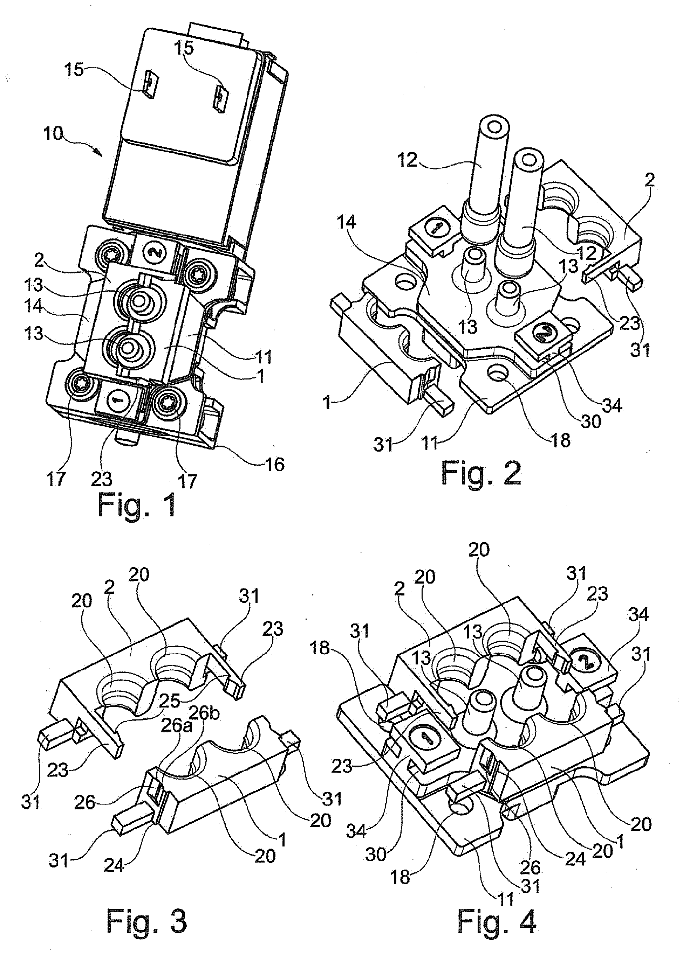

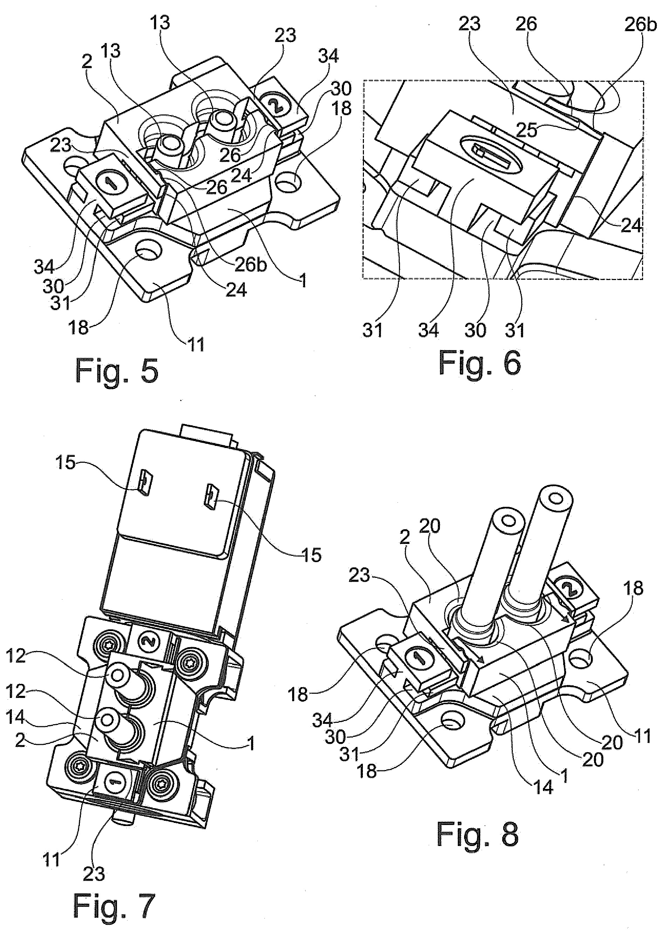

L'électrovanne 10 représentée aux figures 1 et 7 comporte, comme on peut le voir plus précisément à la figure 2, une base 11 comportant une platine 14 de montage de tubulures 12, pour le départ et l'arrivée du fluide dont on cherche à commuter le flux grâce à l'électrovanne.

La platine 14 porte des canules 13, par exemple au nombre de deux comme illustré, qui reçoivent chacune une tubulure 12. Ces canules 13 sont, dans l'exemple considéré, d'axes longitudinaux parallèles, et par exemple orientés généralement perpendiculairement au plan de la platine 14.

Chaque canule 13 communique intérieurement avec des composants de l'électrovanne 10 qui sont connus en eux-mêmes, et permettent sélectivement d'établir ou non une communication entre les canules 13.

La platine 14 et les canules 13 sont de préférence moulées d'une seule pièce en matière plastique avec le reste de la base 11.

L'électrovanne 10 peut comporter, comme illustré, des contacts 15 pour son alimentation électrique.

La base 11 peut être fixée sur une tête 16 de l'électrovanne à l'aide de vis 17, engagées dans des trous 18 de la base 11, par exemple au nombre de quatre dans l'exemple illustré.

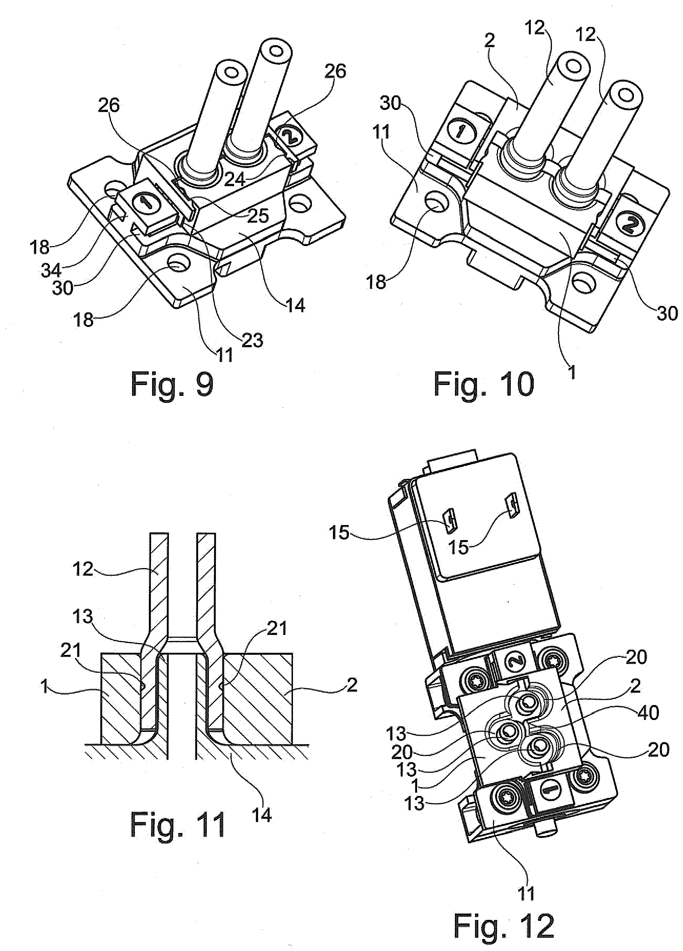

Conformément à l'invention, les tubulures 12 sont retenues en place sur les canules 13 par un système de maintien qui comporte deux parties 1 et 2 qui peuvent s'assembler entre elles autour des tubulures 12 et sur la base 11. Plus particulièrement, dans l'exemple considéré, chaque partie 1 ou 2 comporte deux logements 20 destinés à recevoir sensiblement la moitié d'une tubulure 12 et d'une canule 13 lorsque les deux parties 1 et 2 sont assemblées, comme illustré sur la figure 9.

Chaque partie 1 ou 2 présente au niveau du logement 20 une nervure 21 qui permet de pincer la tubulure correspondante 12 contre la canule 13, comme visible sur la figure 11. La nervure 21 est de préférence de section demi-circulaire, et peut s'étendre sensiblement à mi-hauteur du logement 20.

Les deux parties de retenue 1 et 2 se fixent l'une sur l'autre grâce à deux pattes 23 élastiquement déformables réalisées avec la deuxième partie 2, qui comportent des dents 25. De préférence, comme illustré, la première partie 1 comporte des premiers 26 et seconds 24 reliefs destinés à coopérer avec les dents 25 des pattes 23.

Les premiers reliefs 26 permettent de maintenir les parties 1 et 2 dans une position pré-assemblée, comme illustré à la figure 5 notamment. Chaque premier relief 26 présente deux pans inclinés 26a et 26b, plus particulièrement visibles à la figure 3, qui permettent de dégager la dent 25 de ce relief assez aisément, si l'opérateur le souhaite, pour séparer les parties 1 et 2.

De préférence, en position pré-assemblée, le pan 26b épouse sensiblement la forme de la patte 23, comme on peut le voir sur la figure 5 notamment.

Le passage des dents 25 de la position de pré-assemblage à la position assemblée s'effectue en rapprochant les parties de retenue 1 et 2 l'une de l'autre, comme illustré sur les figures 8 et 9. Au cours de ce mouvement, les dents 25 remontent sur les pans 26b des premiers reliefs 26 puis s'accrochent sur les deuxièmes reliefs 24. Ces derniers sont formés par des décrochements qui s'opposent à l'écartement des parties de retenue 1 et 2, même si un effort de séparation relativement important est exercé.

Pour séparer les première et deuxième parties 1 et 2, l'utilisateur peut, à l'aide d'un outil tel qu'un tournevis par exemple, venir écarter les pattes 23 de la première partie de façon à libérer les dents 25 des seconds reliefs 24.

Lorsque les première et deuxième parties 1 et 2 sont déplacées par un mouvement relatif qui les rapproche selon une direction d'assemblage sensiblement perpendiculaire à l'axe des canules 13, les première et deuxième parties 1 et 2 viennent s'engager sur des reliefs d'accrochage réalisés avec la platine 14 de façon à être solidaires de celle-ci.

Dans l'exemple considéré, la platine 14 comporte des gorges 30 qui reçoivent des pattes latérales 31 venues d'une seule pièce par moulage avec les première et deuxième parties 1 et 2, de chaque côté de celles-ci. Les gorges 30 sont par exemple formées à l'aide de reliefs 34 en forme de T, venus de moulage avec la base 11.

Lorsque les première et deuxième parties sont pré-assemblées, les pattes latérales 31 s'engagent dans les gorges 30, sous les reliefs 34, comme illustré sur la figure 6, et sont ainsi bloquées par la base 11 vis-à-vis d'un mouvement vers l'avant selon l'axe des canules 13.

Quand les parties de retenue 1 et 2 passent en position assemblée, les pattes latérales 31 restent engagées dans les gorges 30, comme visible notamment sur la figure 9.

Les tubulures 12 sont alors maintenues serrées sur les canules 13 par les nervures 21, tandis que les première et deuxième parties 1 et 2 sont elles-mêmes retenues sur la platine 14 par les pattes latérales 31 engagées dans les gorges 30.

La variante de réalisation illustrée sur les figures 12 à 19 diffère de celle qui vient d'être décrite par le fait que les canules 13 sont au nombre de trois, correspondant par exemple à une arrivée en fluide et à deux sorties vers lesquelles le fluide est sélectivement canalisé en fonction de l'état de l'électrovanne, ou à deux arrivées et une sortie.

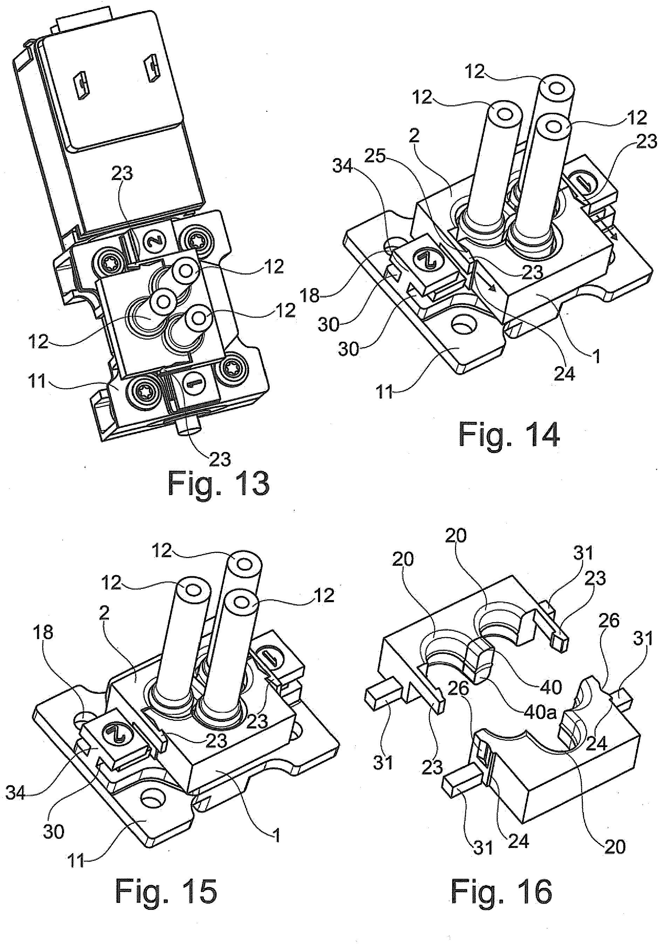

Les première et deuxième parties 1 et 2 comportent, tout comme dans l'exemple de réalisation précédent, des pattes de fixation 23 qui permettent leur assemblage par encliquetage, et des pattes latérales 31 qui permettent, en coopérant avec la base 11, de retenir le système de maintien sur l'électrovanne 10, comme visible notamment sur les figures 14 et 15.

Les logements 20 présentent une forme différente, de façon à pouvoir retenir les tubulures 12 en place sur les trois canules 13.

La première partie 1 comporte trois logements 20, dont un logement central en forme de U et deux logements latéraux en forme de quart de cercle chacun, comme représenté à la figure 16 notamment. La deuxième partie comporte deux logements chacun en forme de J, disposés dos à dos, de part et d'autre d'une avancée centrale 40.

Chaque logement 20 en forme de J vient compléter le logement 20 en forme de quart de cercle de la partie opposée pour serrer une tubulure 12 latérale, comme illustré à la figure 13. L'avancée 40 présente un bord avant incurvé 40a qui s'applique contre la tubulure centrale 12 d'un côté, l'autre côté de la tubulure centrale venant en appui contre le fond du logement en forme de U. De préférence, le bord avant de l'avancée centrale 40 ainsi que les nervures 21 formant saillie dans le fond des logements 20, épousent sensiblement la courbure de la surface extérieure de la partie des tubulures 12 emmanchée sur les canules 13.

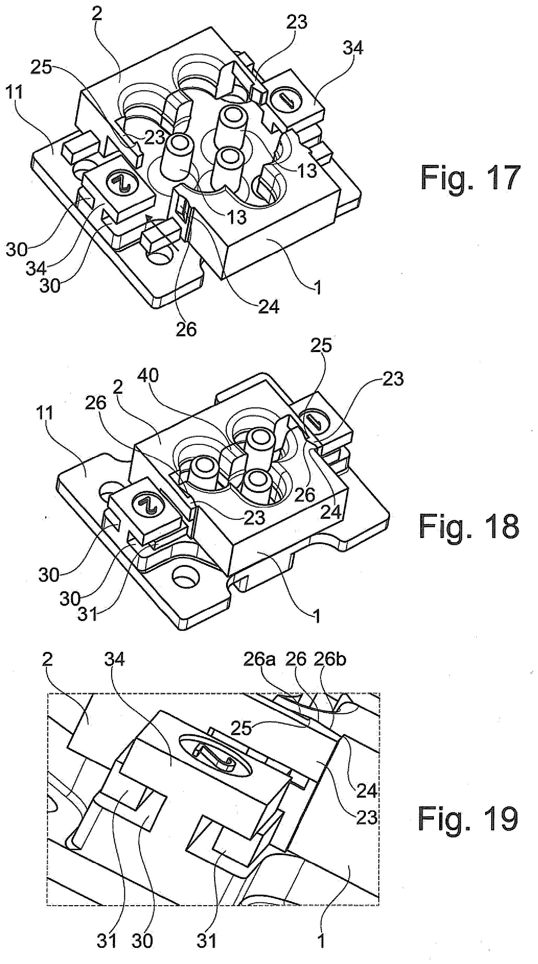

Tout comme dans l'exemple de réalisation précédent, il est avantageux que les parties de retenue comportent, comme illustré sur les figures 17 et 18 notamment, des premiers reliefs 26 permettant un pré-assemblage des première et deuxième parties 1 et 2.

Bien entendu, l'invention n'est pas limitée aux exemples qui viennent d'être décrits. On peut par exemple fixer les deux parties 1 et 2 du système de maintien entre elles autrement que par encliquetage d'une partie sur l'autre, par exemple par encliquetage de chacune des parties sur la base 11.

La retenue du système de maintien sur la base 11 peut se faire autrement que par engagement de pattes latérales dans des gorges correspondantes formées par des reliefs en T. Par exemple, les deux parties s'assemblent autour de reliefs de la base qu'elles emprisonnent entre elles et qui cessent d'être apparents après assemblage des deux parties.

Les deux parties peuvent encore être reliées d'un côté par une charnière film et être pourvues de moyens de fixation par encliquetage du côté opposé.

Bien qu'il soit particulièrement avantageux que les première et deuxième parties puissent prendre deux positions successives où elles sont retenues sur la base, à savoir les positions pré-assemblée et assemblée, dans une variante la première partie 1 est réalisée sans les reliefs 26 qui permettent le pré-assemblage des parties de retenue 1 et 2. Dans ce cas, ces dernières sont directement amenées dans la position assemblée.

L'expression « comportant un » doit se comprendre comme étant synonyme de « comprenant au moins un ».

## Revendications

1. Electrovanne (10), comportant:
- une base (11) comportant une platine (14),
- au moins une canule (13) de réception d'une tubulure (12) en matière plastique, s'étendant en avant de la platine (14), sur laquelle la tubulure est destinée à être emmanchée,
- un système de retenue de la tubulure (12) sur la canule (13), comportant deux parties (1, 2) mobiles l'une par rapport à l'autre selon un mouvement qui les rapproche selon une direction d'assemblage sensiblement perpendiculaire à l'axe de la canule, pouvant prendre au moins une position assemblée où les deux parties (1, 2) exercent une force sur la tubulure pour la maintenir serrée contre la canule, tout en étant retenues par la base (11).

2. Electrovanne selon la revendication 1, les deux parties de retenue (1,2) étant configurées pour prendre une position pré-assemblée où elles sont retenues sur la base (11) tout en permettant la mise en place de la ou des tubulures (12) sur la ou les canules (13).

3. Electrovanne selon la revendication 1 ou 2, comportant au moins deux canules (13), les deux canules (13) étant notamment d'axes longitudinaux parallèles.

4. Electrovanne selon l'une quelconque des revendications précédentes, les deux parties (1, 2) coopérant par encliquetage dans la position assemblée, et de préférence également dans la position pré-assemblée définie à la revendication 2.

5. Electrovanne selon l'une quelconque des revendications précédentes, les deux parties (1, 2) étant totalement séparées avant leur montage sur la base (11) de l'électrovanne.

6. Electrovanne selon l'une quelconque des revendications précédentes, l'une des parties comportant au moins une patte (23) élastiquement déformable, adaptée à s'encliqueter sur un relief (24) de l'autre partie lorsque les deux parties sont en position assemblée.

7. Electrovanne selon les revendications 2 et 6, l'une des parties comportant au moins une patte (23) élastiquement déformable, adaptée à s'encliqueter sur un premier relief (26) de l'autre partie lorsque les deux parties sont en position pré-assemblée et sur un deuxième relief (24) de l'autre partie lorsque les deux parties (1,2) sont en position assemblée.

8. Electrovanne selon l'une quelconque des revendications précédentes, les parties (1,2) présentant chacune au moins un bourrelet (21) agencé pour pincer la tubulure (12) contre la canule (13) correspondante, notamment un bourrelet (21) présentant une section transversale demi-circulaire.

9. Electrovanne selon l'une quelconque des revendications précédentes, chaque partie (1,2) présentant au moins une ouverture demi-circulaire (20), destinée à se placer autour d'une tubulure correspondante.

10. Electrovanne selon l'une quelconque des revendications précédentes, la base (11) présentant des logements (30) dans lesquels s'engagent les parties (1, 2) au moins en position assemblée, pour retenir celles-ci sur la base (11).

11. Electrovanne selon les revendications 2 et 10, les parties (1,2) s'engageant dans les logements (30) lorsqu'elles sont en position pré-assemblée.

12. Electrovanne selon l'une quelconque des revendications précédentes, chaque partie (1;2) comportant deux pattes latérales (31) qui viennent chacune s'engager dans un logement (30) défini par un relief (34) en forme de T de la base (11), lorsque les deux parties (1, 2) sont assemblées l'une sur l'autre, et mieux à la fois lorsqu'elles sont en position pré-assemblée et en position assemblée.

13. Electrovanne selon l'une quelconque des revendications précédentes, présentant trois canules (13), l'une des parties du système de retenue comportant trois logements (20), dont deux logements latéraux de section chacun sensiblement en quart de cercle, et un logement central de section sensiblement en U, lorsque les parties (1,2) sont observées de dessus, dans l'axe des canules, l'autre partie présentant une avancée centrale (40), destinée à s'engager entre deux des canules, et deux logements (20) chacun de section sensiblement en J, disposés dos à dos de part et d'autre de l'avancée centrale (40).

14. Electrovanne selon l'une quelconque des revendications précédentes, étant pneumatique, à pression ou vide, ou hydraulique.

15. Electrovanne selon l'une quelconque des revendications précédentes, les tubulures (12) étant en un matériau élastiquement déformable.

## Patentansprüche

1. Elektromagnetisches Ventil (10), umfassend:
- eine Basis (11) mit einer Platte (14),
- zumindest eine Kanüle (13) zur Aufnahme eines Schläuchs(12) aus Kunststoffmaterial, die aus der Platine (14) ragt, auf welche der Schlauch aufsteckbar ist,
- ein Schlauchhaltesystem (12) an der Kanüle (13), umfassend zwei Abschnitte (1, 2) die relativ zueinander in einer Bewegung bewegbar sind, welche sie in einer im Wesentlichen senkrecht zur Achse der Kanüle verlaufenden Montagerichtung aneinander annähert, sodass sie mindestens eine Montageposition einnehmen können, in welcher die beiden Abschnitte (1, 2) eine Kraft auf den Schlauch ausüben, um diesen zu halten und fest an der Kanüle zu halten, während sie von der Basis (11) gehalten werden.

2. Elektromagnetisches Ventil nach Anspruch 1, wobei die beiden Halteabschnitte (1,2) so konfiguriert sind, dass sie eine Vormontageposition annehmen, in welcher sie an der Basis (11) gehalten werden, während das Aufstecken des Schlauchs (12) oder der Schläuche auf die Kanüle oder die Kanülen (13) ermöglicht wird.

3. Elektromagnetisches Ventil nach Anspruch 1 oder 2, mit mindestens zwei Kanülen (13), wobei die zwei Kanülen (13), insbesondere parallele Längsachsen haben.

4. Elektromagnetisches Ventil nach einem der vorhergehenden Ansprüchen, die beiden Abschnitte (1, 2) zusammenwirken, indem sie in der Montageposition einrasten und vorzugsweise auch in der Vormontageposition, wie sie in Anspruch 2 definiert ist.

5. Elektromagnetisches Ventil nach einem der vorhergehenden Ansprüche, wobei die beiden Abschnitte (1, 2) vor der Montage an der Basis (11) des elektromagnetischen Ventils vollständig voneinander getrennt sind.

6. Elektromagnetisches Ventil nach einem der vorhergehenden Ansprüche, wobei einer der Abschnitte zumindest eine elastisch deformierbare Lasche (23) umfasst, die dazu ausgelegt ist, in ein Rastrelief (24) des anderen Abschnitts einzurasten, wenn die beiden Abschnitte sich in der Montageposition befinden.

7. Elektromagnetisches Ventil nach den Ansprüchen 2 und 6, wobei einer der Abschnitte zumindest eine elastisch deformierbare Lasche (23) umfasst, die dazu ausgelegt ist, auf einem ersten Relief (26) des anderen Abschnitts einzurasten, wenn die beiden Abschnitte sich in der Vormontageposition befinden, und in ein zweites Relief (24) des anderen Abschnitts eizurasten, wenn die beiden Abschnitte (1,2) sich in der Montageposition befinden.

8. Elektromagnetisches Ventil nach einem der vorhergehenden Ansprüche, wobei die Abschnitte (1, 2) jeweils mindestens einen Wulst (21) haben, um den Schlauch (12) gegen die Kanüle (13) zu pressen, insbesondere einen Wulst (21) mit halbkreisförmigem Querschnitt.

9. Elektromagnetisches Ventil nach einem der vorhergehenden Ansprüche, wobei jeder Abschnitt (1, 2) mindestens eine halbkreisförmige Öffnung (20) aufweist, die dazu ausgelegt ist, sich um einen entsprechenden Schlauch zu legen.

10. Elektromagnetisches Ventil nach einem der vorhergehenden Ansprüchen, wobei die Basis (11) Aufnahmen (30) aufweist, in welche die Abschnitte (1,2) zumindest in der Montageposition eingreifen, sie auf der Basis zu halten (11).

11. Elektromagnetisches Ventil nach den Ansprüchen 2 und 10, wobei die Abschnitte (1,2) in die Aufnahmen (30) eingreifen, wenn sie sich in der Vormontageposition befinden.

12. Elektromagnetisches Ventil nach einem der vorhergehenden Ansprüche, wobei jeder Abschnitt (1,2) zwei Seitenlaschen (31) aufweist, die jeweils in eine Aufnahme (30) eingreifen, die durch ein T-förmiges Relief (34) der Basis (11) gebildet sind, wenn die beiden Abschnitte (1,2) übereinander montiert sind, und insbesondere sowohl wenn beide sich in der Vormontageposition als auch in der Montageposition befinden.

13. Elektromagnetisches Ventil nach einem der vorhergehenden Ansprüche, umfassend drei Kanülen (13), wobei einer der Abschnitte des Haltesystems drei Aufnahmen (20) umfasst, von welchen zwei seitliche Aufnahmen jeweils im Wesentlichen ein Viertelkreisprofil haben, und eine zentrale Aufnahme ein im Wesentlichen U-förmigem Profil hat, wenn die Abschnitte (1,2) von oben entlang der Achse der Kanüle betrachtet werden, wobei der andere Abschnitt einen zentralen Vorsprung (40), der dazu ausgelegt ist, zwischen zwei Kanülen einzugreifen, und zwei Aufnahmen (20) mit im Wesentlichen J-Förmigem Profil aufweist, die Rücken an Rücken zueinander auf beiden Seiten des zentralen Vorsprungs (40) angeordnet sind.

14. Elektromagnetisches Ventil nach einem der vorhergehenden Ansprüche, das pneumatisch, mit Druck oder Vakuum oder hydraulisch arbeitet.

15. Elektromagnetisches Ventil nach einem der vorhergehenden Ansprüche, wobei die Schläuche (12) aus einem elastisch deformierbaren Material bestehen.

## Claims

1. Solenoid valve (10), comprising:
- a base (11), comprising a plate (14),
- at least one cannula (13) for receiving a tube (12) made of plastic, extending in front of the plate (14), on which the tube is intended to be fitted,
- a system for holding the tube (12) on the cannula (13), comprising two parts (1, 2) that are mobile in relation to each other in a movement that brings them closer in an assembly direction more or less perpendicular to the axis of the cannula, being able to take up at least an assembled position, where the two parts (1,2) exercise a force on the tube to keep it tight against the cannula, whilst being held by the base (11).

2. Solenoid valve according to claim 1, the two holding parts (1, 2) being configured to take up a pre-assembled position, where they are held on the base (11), whilst allowing the tube or tubes (12) to be put in place on the cannula or cannulas (13).

3. Solenoid valve according to claim 1 or 2, comprising at least two cannulas (13), the two cannulas (13) having parallel longitudinal axes in particular.

4. Solenoid valve according to any one of the previous claims, the two parts (1, 2) cooperating by snapping in the assembled position and preferably also in the pre-assembled position defined in claim 2.

5. Solenoid valve according to any one of the previous claims, the two parts (1, 2) being completely separated before being mounted on the base (11) of the solenoid valve.

6. Solenoid valve according to any one of the previous claims, one of the parts comprising at least one elastically deformable leg (23) suitable for snapping on a contour (24) of the other part, when the two parts are in an assembled position.

7. Solenoid valve according to claims 2 and 6, one of the parts comprising at least one elastically deformable leg (23) suitable for snapping on a first contour (26) of the other part, when the two parts are in a pre-assembled position, and on a second contour (24) of the other part, when the two parts (1,2) are in an assembled position.

8. Solenoid valve according to any one of the previous claims, the parts (1,2) each having at least one bead (21) arranged to grip the tube (12) against the corresponding cannula (13), particularly a bead (21) having a semi-circular cross section.

9. Solenoid valve according to any one of the previous claims, each part (1, 2) having at least one semi-circular opening (20), intended to be placed around a corresponding tube.

10. Solenoid valve according to any one of the previous claims, the base (11) having housings (30), in which the parts (1,2) engage at least in an assembled position, in order to hold them on the base (11).

11. Solenoid valve according to claims 2 and 10, the parts (1,2) engaging in the housings (30), when they are in a pre-assembled position.

12. Solenoid valve according to any one of the previous claims, each part (1; 2) comprising two lateral legs (31), which each engage in a housing (30) defined by a T-shaped contour (34) of the base (11), when the two parts (1,2) are assembled on each other and better at the time when they are in a pre-assembled position and an assembled position.

13. Solenoid valve according to any one of the previous claims, having three cannulas (13), one of the parts of the holding system comprising three housings (20), two of which are lateral housings with a more or less quarter circle section and one of which is a central housing with a more or less U-shaped section in the axis of the cannulas, when the parts (1,2) are seen from above, the other part having a central projection (40), intended to engage between two of the cannulas, and two housings (20), each with a more or less J-shaped section, arranged back to back on either side of the central projection (40).

14. Solenoid valve according to any one of the previous claims, being pneumatic, under pressure or vacuum, or hydraulic.

15. Solenoid valve according to any one of the previous claims, the tubes (12) being made of an elastically deformable material.
